Europäisches Patentamt

(19) European Patent Office

Office européen des brevets

(11) Publication number: **0 186 016 B1**

## EUROPEAN PATENT SPECIFICATION

(45) Date of publication of patent specification: **17.04.91**

(51) Int. Cl.5: **B29C 43/18, B29C 67/18, B29C 51/08, B29C 43/40, B29C 43/42, //B29L9:00**

(21) Application number: **85115566.3**

(22) Date of filing: **06.12.85**

(54) **A method of making a laminated body and a molding apparatus for the same.**

(30) Priority: **10.12.84 JP 261088/84**
**07.12.84 JP 259728/84**

(43) Date of publication of application:
**02.07.86 Bulletin 86/27**

(45) Publication of the grant of the patent:
**17.04.91 Bulletin 91/16**

(84) Designated Contracting States:
**DE FR GB IT**

(56) References cited:
**EP-A- 0 033 116**
**DE-A- 3 303 913**
**FR-A- 2 013 740**

**PATENT ABSTRACTS OF JAPAN, vol. 8, no. 280 (M-347)[1717], 21st December 1984, page 150 M 347; & JP-A-59 150 741 (SUMITOMO KAGAKU KOGYO K.K.) 29-08-1984**

(73) Proprietor: **SUMITOMO CHEMICAL COMPANY, LIMITED**
**Kitahama 4-chome 5-33**
**Chuo-ku Osaka 541(JP)**

(72) Inventor: **Masui, Shohei Sumitomo Chemical Company, Ltd.**
**10-1, Tsukahara 2-Chome**
**Takatsuki City Osaka(JP)**
Inventor: **Oishi, Kanemitsu Sumitomo Chemical Company, Ltd.**
**10-1, Tsukahara 2-Chome**
**Takatsuki City Osaka(JP)**
Inventor: **Mistui, Kiyoshi Sumitomo Chemical Company, Ltd.**
**10-1, Tsukahara 2-Chome**
**Takatsuki City Osaka(JP)**
Inventor: **Hosokawa, Toshihiro Hosokawa Seisakusho Co. Ltd**
**2840, Ikedashimomachi**
**Izumi City Osaka(JP)**

Inventor: **Ishitsubo, Ryuichi Hosokawa
Seisakusho Co. Ltd
2840, Ikedashimomachi
Izumi City Osaka(JP)**

(74) Representative: **Lehn, Werner, Dipl.-Ing. et al
Hoffmann, Eitle & Partner Patentanwälte Ar-
abellastrasse 4
W-8000 München 81(DE)**

## Description

This invention relates to a method of making a laminated body having a bended part, which consists of an upper layer member and a synthetic resin and a molding apparatus for use in the same.

As one method of making a laminated body, there is proposed, for example, in the Japanese Patent Application Disclosure No.150740 of 1984 a method in which the molding of the laminated body is performed by the use of a molding apparatus which is provided shiftably with a female mold or a male mold and with an upper layer member-fixing frame having a sliding part through which the male mold passes slidingly, and wherein, after holding an upper member between the upper layer member-fixing frame and the female mold, a molten resin is supplied between the upper layer member and the female mold or the male mold and then the mold-tightening of the female mold and the male mold is conducted.

By the way, in this specification, the one whose outer side face corresponds to the side face of the outermost circumference being opposite to each other at the mold-tightening time is called a male mold, while the one whose inner side face corresponds to the same as above-mentioned side face of the outermost circumference being opposite to each other at the same mold-tightening time is called a female mold.

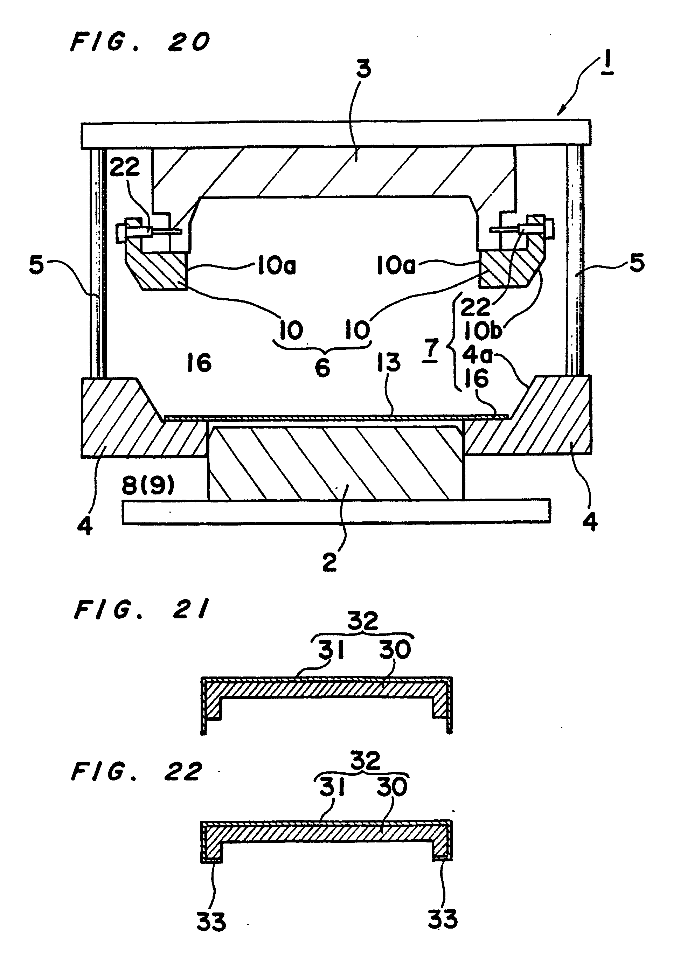

When using this former method as mentioned above, it is indeed impossible to make such kind of a laminated body(32) as possessing a good appearance clear of wrinkles or tears over the upper layer member(31) covering the synthetic resin(30), as shown in Fig. 21, but if trying to obtain such a laminated body(32) as shown in Fig.22, to say more precisely, such a laminated body(32) as having a bended part(33) of the upper layer member-(31), then not only the bending process of the upper layer member(31) is required separately after having made in advance the laminated body-(32) in the form as shown in Fig.21, but also it is feared that wrinkles are apt to occur at the bended part(33) of the upper layer member(31).

Synthetic resinous moldings are being used nowadays in large quantities in every field including, for example, motorcars, home electric appliances, and other for reasons of the inexpensiveness, the easy shapability as desired and the lightweightiness of them.

On the other hand, however, these molded goods have certain defects; that is to say they are cheap-looking, cold to the touch or easily scratched, wherefrom these has been pursued strongly how to impart them a sort of some decorativeness or a sense of being soft to be touch from way back.

For such reasons, although a variety of investigations and researches have been done in the past with the object of acquiring some kind of compound articles being endowed with any function, enough to satisfy such demands as mentioned above, yet it is proved that it is difficult for the products made of a single substance to possess the free shapability, the desired strength and the surface property being improved in relating to the above-mentioned defects at that .

Therefore, in the present state of things, these are widely used in general such kinds of laminated bodies as being assembled with plural materials which have a variety of functions.

The method and the apparatus according to our invention both have been accomplished by aiming to solve the aforementioned controversial point lying latent in the former method and thereby enables to obtain the laminated body being covered by the upper layer member without wrinkles, tears, and others and being further in possession of a good appearance with few wrinkles at the bent part of the upper layer member.

Our invention has for its object to provide a method of making a laminated body and a molding apparatus which are both adapted to mass production because of their working process and which enable the manufacturing machine to be simplified in design and construction.

According to one aspect of the invention, there is provided a molding apparatus comprising a first mold having a molding cavity, a second mold adapted to mate with said molding cavity of said first mold and an upper layer member-fixing frame mounted around the side of said first mold or said second mold, characterized by an expanding and contracting means for shifting said upper layer member-fixing frame so that an outer side face of said upper layer member-fixing frame slides over the outside surface of said second mold and a split frame attached around the edge of said first mold through a shifting mechanism to allow said split frame to slide towards and away from said first mold molding cavity.

According to another aspect of the invention, there is provided a method of making a laminated body having a synthetic resin provided with an upper layer member thereon comprising the steps of arranging said upper layer member between an upper layer member-fixing frame attached to the side of a second mold and a split frame attached to a first mold, supplying molten resin between said first and second molds at any time from said arranging and prior to completion of pressing, closing said split frame and said upper layer member-fixing frame so that a periphery of said upper layer member is held by said split frame and said upper layer member-fixing frame, closing said first and second molds so as to give form to said upper layer member, pressing said two molds together so as to cause said upper layer member and said molten resin to move with compression to conform to the shape of said two molds and cover the surface of said resin body with said layer member, characterized by shifting said split frame to an inside cavity of said first mold simultaneously or prior to closing said split frame and after pressing, further pressing said first and second molds together to bend said layer member for lapping an end portion of said laminated body.

For a better understanding of the invention, and to show how the same may be carried into effect, reference will now be made, by way of example, to the accompanying drawings, in which:

Fig. 1 is a sectional view of a first exemplary embodiment of the invention;

Fig. 2 is a view seen in the direction of the arrowheads of the lines A-A of Fig. 1;

Fig. 3 is a view seen in the direction of the arrowheads of the lines B-B of Fig. 1;

Fig. 4 is a sectional view;

Fig. 5 is a section view;

Fig. 6 is a modified view of Fig. 2;

Fig. 7 is a sectional view;

Fig. 8 is a sectional view;

Fig. 9 is a sectional view;

Fig. 10 is a sectional view of a first modified embodiment of the invention;

Fig. 11 is a section view taken on the line A-A of Fig. 10;

Fig. 12 is a sectional view;

Fig. 13 is a sectional view;

Fig. 14 is a section view;

Fig. 15 is a sectional view;

Fig. 16 is a sectional view;

Fig. 17 is a sectional view of a second modified embodiment of the invention;

Fig. 18 is a section view;

Fig. 19 is a sectional view;

Fig. 20 is a sectional view of a third modified embodiment of the invention;

Fig. 21 is a sectional view of a known laminated body; and

Fig. 22 is a sectional view of another known laminated body.

[Exemplary Embodiment]

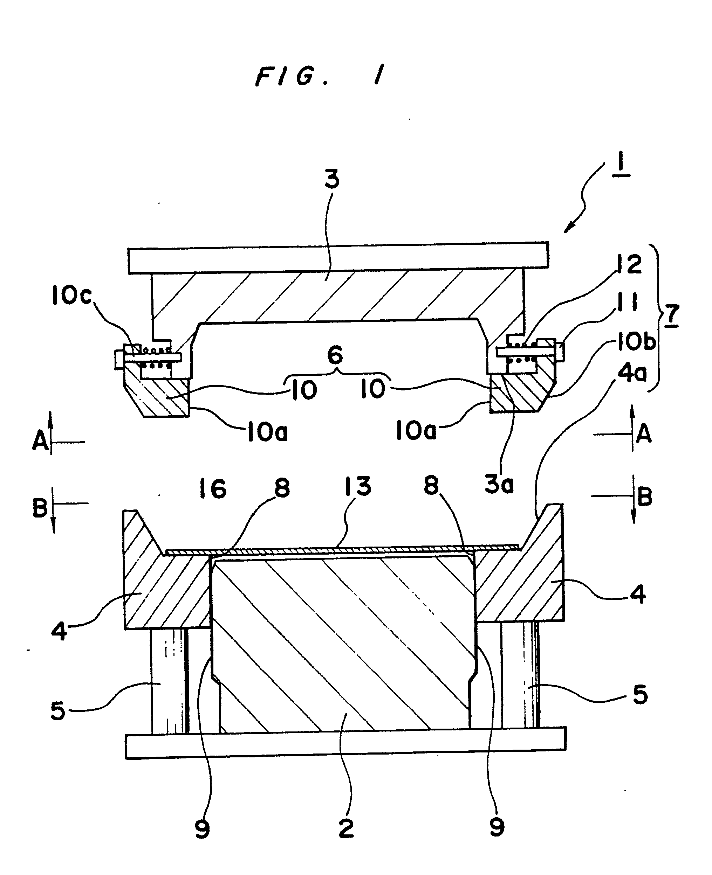

There will be now described particularly an exemplary embodiment of the method and apparatus according to the present invention with reference to Figs. 1 to 9.

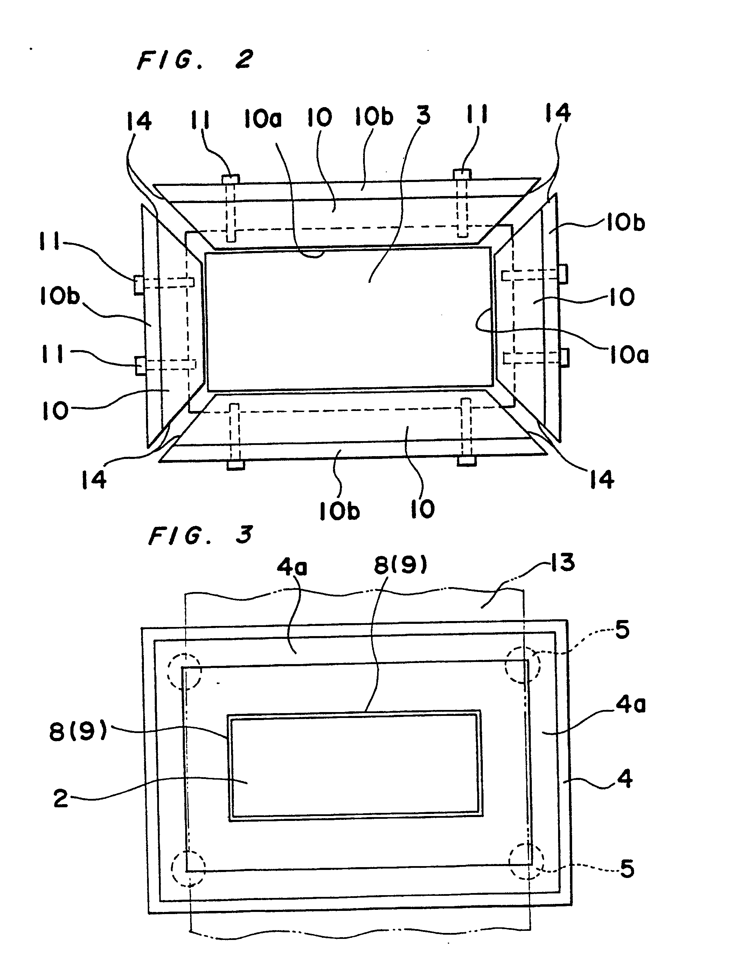

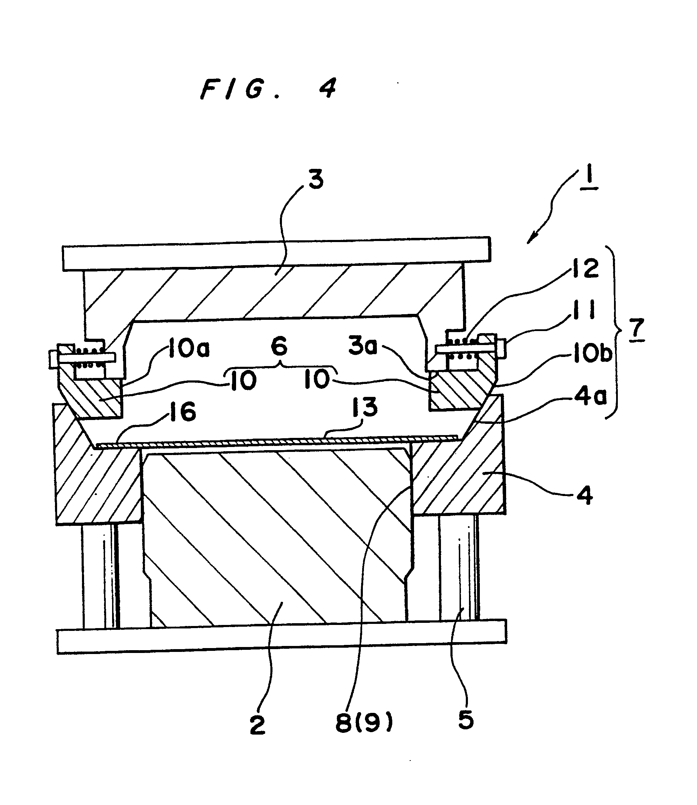

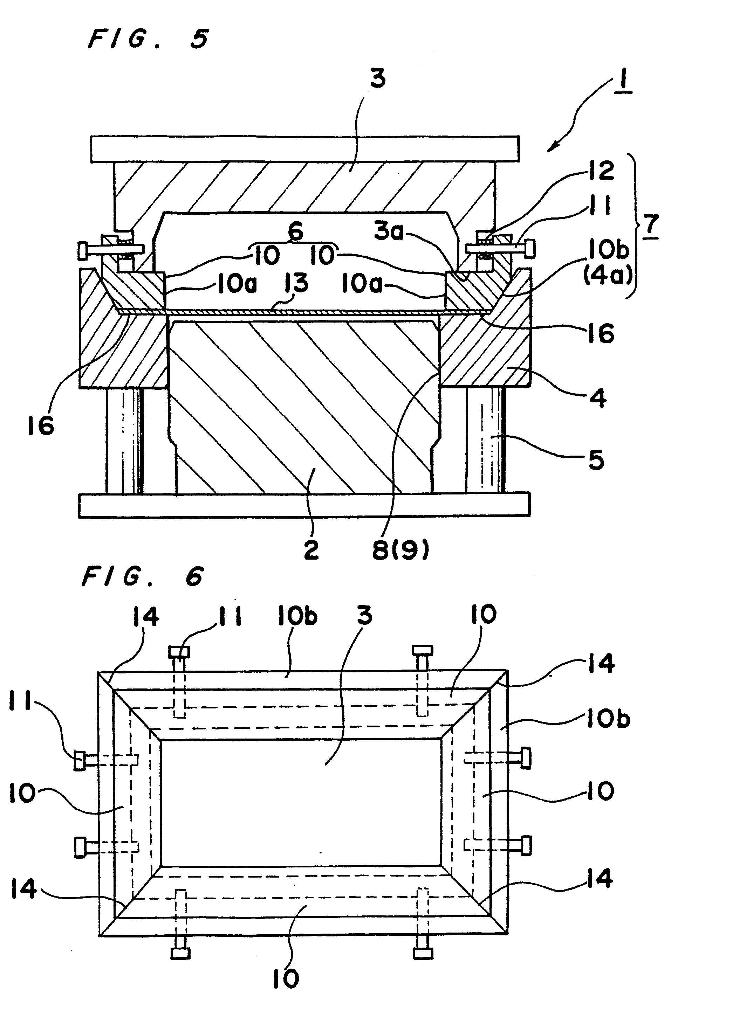

Fig. 1, Fig. 4, Fig. 5, and Figs. 7 to 9 are sectional views for illustrating the exemplary embodiment; Fig. 2 is a view seen in the direction of the arrowheads of the lines A-A of Fig. 1; Fig. 3 is a view seen in the direction of the arrowheads of the lines B-B of Fig. 3; and Fig. 6 is a changed view of Fig. 3.

In the Figures, the reference numerals 1 , 2, 3, 4, 5, 6, 7 , 8, 9, 13, 15 and 18 indicate a molding apparatus, a male mold, a female mold, an upper layer member-fixing frame, an expanding and contracting means, a split frame, a shifting mechanism, a sliding face, an outer side face of the male mold 2, an upper layer member, molten resin, and a laminated body, respectively.

The molding apparatus 1 comprises the male mold 2, the upper layer member-fixing frame 4, the expanding and contracting means 5, these three being situated below, the female mold 3 being supported by a well-known going up-and-down mechanism (not shown) and being situated above, the split frame 6 being attached to the foregoing female mold 3, and the shifting mechanism 7 letting the above split horizontally.

The upper layer member-fixing frame 4 which has the upper face being opposite to the split frame 6 is mounted shiftably by a plurality of the expanding and contracting means 5, and possesses its own sliding face 8 and tapered surface 4a.

It is permissible for use in the expanding and contracting means 5 to adopt freely any known oil pressure cylinder, air pressure cylinder, air pressure spring, elastomeric spring, steel spring, and such like depending on the required stroke.

In this connection, there can be adopted preferably such as some spring mechanism expanding and contracting in response to the mold-tightening force of both the molds, male 2 and female 3.

The sliding face 8 is one whereon the outer side face 9 of the male mold 2 slides over the whole circumference.

The split frame 6 consists of a plurality of split parts 10---, is attached to the side of the female mold 3, and slides gatherably (See Fig. 6) and dispersibly (See Fig. 2) on the face 3a of the female mold 3 being opposite to the upper layer member-fixing frame 4, when the inner face 10a of each split part 10 is situated inside the cavity of the female mold 3 at the gathering time and outside the cavity of the female mold 3 at the dispersing time.

The splitted part 10 has the tapered face 10a of as a same angle as the tapered face 4a has, and further possesses sliding holes 10c where through plural rod member 11 pass slidingly.

The above-mentioned rod members 11 are screwed to (not shown) the female mold 3 to be secured fixedly thereon and are provided elastically with, for example, springs 12. (not shown in Fig. 2)

The shifting mechanism 7 is composed of the above-mentioned tapered faces 4a and 10b, the rod members 11, and the springs 12.

Using the molding apparatus 1 relating to the exemplary embodiment which has such a construction as mentioned above, the method 1 according to our invention is effectuated, for example, in the sequence of processes from ① to ⑥ described below;

① To begin with, the upper layer member 13 is arranged between the upper layer member-fixing frame 4 and the split frame 6, to say more exactly, the upper layer member 13 is placed on the upper layer member-fixing frame 4.(See Fig. 1)

② Next, when making the going up-and-down mechanism actuate, the female mold 3 and the split frame 6 go down, whereby the tapered face 4a impinges against the tapered face 10b. (See Fig. 4)

③ After that, the female mold 3 continues further to go down, the splitted parts 10 compress the spring 12 (this spring 12 contracts earlier than the expanding and contracting means 5, whereby the sliding holes 10c are guided by the rod members 11 to make the splitted parts 10 slide on the face 3a of the female mold 3 and shift to the inside of the cavity of the female mold 3 the splitted parts 10 gather and each of their splitted faces 14 impinges against each one another, wherefore the periphery of the upper layer member 10 is held between the upper layer member-fixing frame 4 and the split frame 6. (See Fig.5 and 6)

④ When molten resin 15 is supplied between the upper layer member 13 and the male mold 2, on the one hand, the female mold 3 and the split frame 6 both are made to go down, on the other, then the expanding and contracting means 5 contracts and the upper layer member-fixing frame 4 slides on the outer side face 9 of male mold 2 and goes down.

At this time, the supply of the molten resin 15 is conducted by a well-known melt-plasticizing means such as an extruder(not shown) through the molten resin passage (not shown) being provided in the interior of the male mold 2.

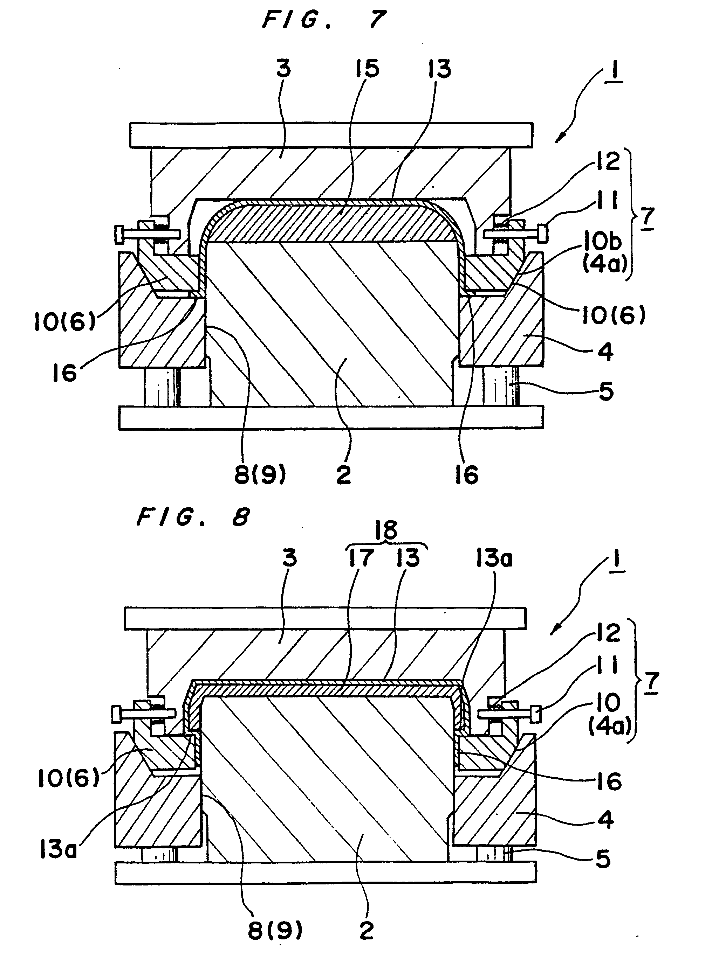

At the same time with the above, the molten resin 15 streams to compress the upper layer member 13 to the side of the female mold 3, in concert with which the molten resin 15 is squeezed into the cavity of the female mold 3 with the periphery of the upper layer member 13 gliding between the upper layer member-fixing frame and the split frame 6 and with the upper layer member 13 extending.(See Fig. 7)

⑤ By the female mold 3 continuing to go down further, the both molds, male 2 and female 3 are mold-tightened completely, and the bended part 13a of the upper layer member 13 is also molded to be given form, whereby the upper layer member 13 and the synthetic resin 17 are united in a body and the molding is completed in doing so.(See Fig.8)

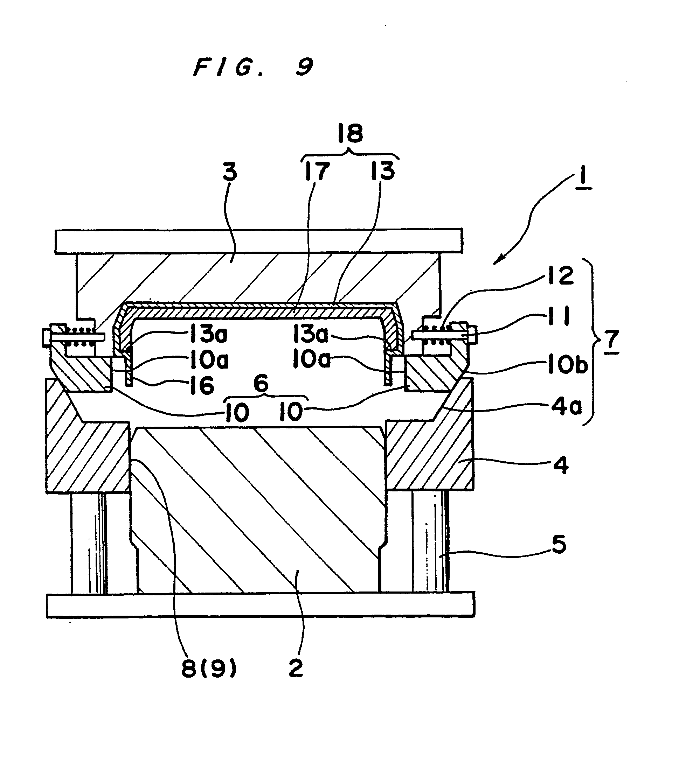

⑥ After the synthetic resin 17 has hardened, when the mold-tightening force is cleared away, then the expanding and contracting means 5 extends first, and after that the spring 12 extends too, as a result of which the inner faces 10a of the splitted parts 10 shift to the outside of the cavity of the female mold 3, thereby the finished laminated body 18 becoming possible to be taken out.(See Fig. 9)

In this method according to our invention, a point of time when the molten resin 15 is to be supplied is not restricted only to the above-described time.

It does not matter if the supply of the molten resin 15 is conducted either when both the male mold 2 and the female mold 3 are made to further approach as far as the position where the upper layer member 13 is squeezed into the intermediary stage after the periphery 16 of the upper layer member 13 has been put between, or, directly after placing the upper layer member 13 on the upper layer member-fixing frame 4.

Within the scope of the invention, the form of the split frame 6 or the shifting mechanism 7 and others are not limited only to such ones as shown in the exemplary embodiment. The forms as shown in the modified embodiments 1 to 3 described hereinafter may also be employed.

In summary, at least the split frame 6 should have a construction whereby it is able to gather slidingly to the inside of the cavity of the female mold 3 at the time of the upper layer member 13 being held between or prior to this time, and to disperse slidingly to the outside of the cavity of the female mold 3 after the completion of the molding.

Furthermore, in the construction as shown in the exemplary embodiment, the shifting mechanism 7 does not need any driving means and is easy to control.

In the method and apparatus described herein, it suffices if the molten resin 15 is supplied between the upper layer member 13 and the male mold 2 through at least any one of the molten synthetic resin passages being provided at the inside of the made mold 2 or at the outside of the molding apparatus 1 .

In the method and apparatus described herein, the periphery 16 of the upper layer member 13 sometimes shifts gradually toward the inside of the female mold 3 with the progress of the molding, as shown in Fig. 7 to 8, so that it is especially important to set the fixing force against the upper layer member 13, because the upper layer member 13 is liable to deform itself nearly along the form of the female mold 13 as the latter goes down.

Such being the case, when the fixing force working between the upper layer member-fixing frame 4 and the split frame 6 and between the split frame 6 and the male mold 2 is too small, then the upper layer member 13 undergoes a big glide produced between the upper layer member 4 and the split frame 6, and between the split frame 6 and the male mold 2, and thereby the upper layer member 13 broader than the area required for the laminated body 18 comes to be supplied into the female mold 3, which brings wrinkles to the laminated body 1 , while on the other hand when the fixing force is too big, then the upper layer member 13 becomes unable to bear the tensile force created, thereby ending in the breakage.

In the method and the apparatus described herein, in case, for example the form of the laminated body 18 is simple and some fiber powerful in strechiness is used for the upper layer member 13 (there is often among various kinds of fibers such a one as having the strechiness of 400% ), it is not always necessary that upper layer member 13 ought to have the gliding behavior as deseribed in the exemplary embodiment.

In order to set the above-mentioned fixing force at the time of performing the method, it is necessary to select the optimum value being based on the properties of the materials, that is, the strechiness or the squeezing rate of the upper layer member 13, the curvature of every vertex and edges of the molded goods and , others, however, the one generally used is of 5 ~300 kg/ cm to the sectional area of the fixing part.

In setting the required area of the upper layer member 13, it is necessary to design the upper layer member 13 so as to check the occurrence of trimming losses as possible first on the basis of the developing area of the laminated body 18 and next by reducing the size of the upper layer member 13 while taking the strechiness thereof into consideration.

For the upper layer member 13 there can be named the following substances: woven stuff, unwoven stuff, metal, fiber, thermoplastic resinous net, paper, metal foil, and sheet or film-made of thermoplastic resin and thermoplastic elastomer, but it is also possible to use things decorated with concavoconvex patterns of tie-dyed fabrics , by printing or dyeing , or if using foaming bodies and further it is also possible to use the above mentioned substances in the form of a laminated article which is made by laminating a single or two or more sorts of them using some adhesive agents and the like.

In using such a kind of an upper layer member 13, it will do also if pre-heating it in order to regulate the stress or the strechiness of the upper layer member 13 prior to the supply of it.

For the synthetic resin 17, it is possible to use all of such substances as being ordinarily used in the compression molding, the injection molding, and the extrusion molding, for example, nonfoaming or foaming resins made of thermoplastic elastomers such as ethylene-propylene block copolymer, styrene-butadiene, block copolymer, thermoplastic resin like nylon, polypropylene, polyethylene, polystyrene,acrylonitrile-stylene -butadien block copolymer, and such like, and further the stuffs above mentioned being made to contain fillers, for example, inorganic filler, glass fiber etc.,etc, and such additives as pigment, talc, antistatic agent,and others.

In the modified embodiments 1 to 3 hereinafter described, although the relative position between their male molds 2 and their female molds 3 and their upper layer mambers 4 are subject to change, they have basically the same construction and effect as mentioned in the exemplary embodiment.

[ Modified Embodiment 1 ] :

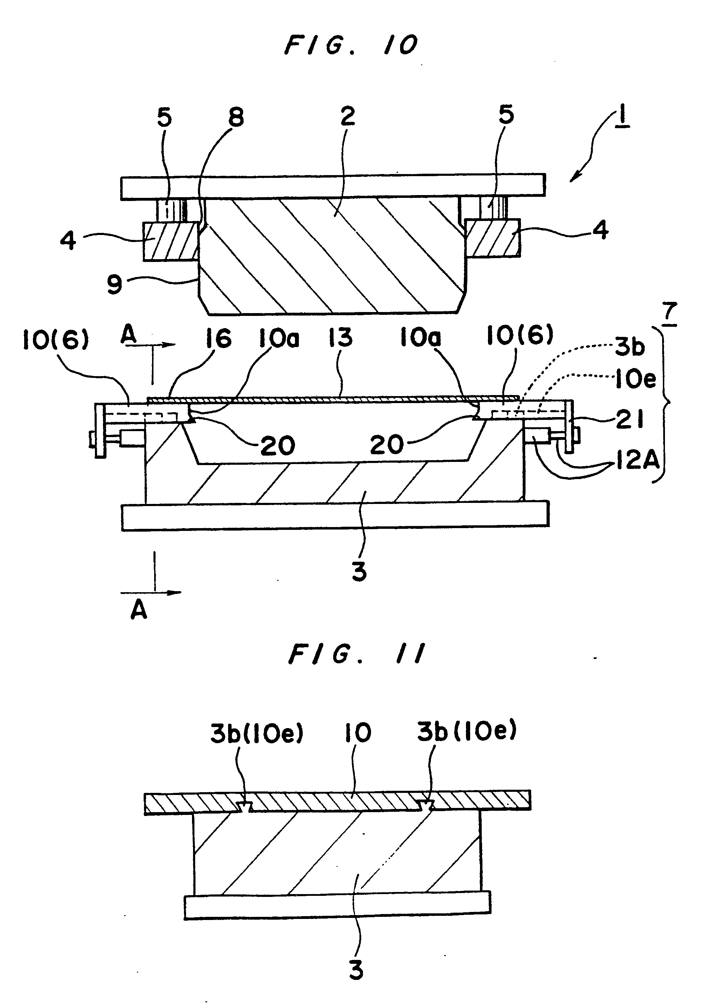

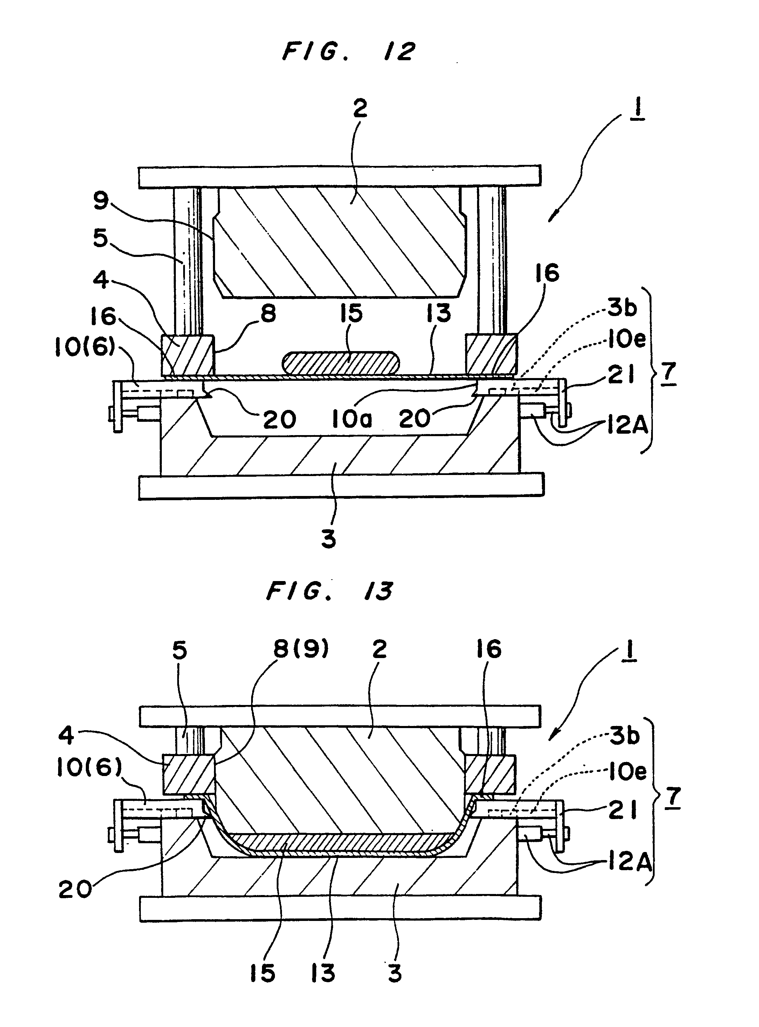

Figs. 10 to 16 are sectional views explaining the modified embodiment 1 of the method and apparatus according to the invention ( only Fig. 11 is a sectional view taken along the lines A-A in Fig. 10 ), wherein the upper layer member-fixing frame 4 is provided shiftably at the male mold 2 which is here situated above, while on the other hand the split frame 6 is provided at the female mold 3 which is here situated below.

The split frame 6 consists of a plurality of split parts 10. These split parts 10 each have a plurality of dovetail grooves 10e and cutting edges 20 extending over the whole circumference of the inner faces 10a.

The shifting mechanism 7 comprises dovetails 3b being provided protuberantly from the female mold 3, dovetail grooves 10e sliding on the above dovetails 3b, driving - expanding and contracting means 12A being attached to the female mold 3, and plates 21.

The method according to the invention is effectuated by the molding apparatus 1 of this modified embodiment 1 going through the sequence of the following processes① to ⑥.

① The upper layer member 13 is placed on the split frame 6 (See Fig.10).

At this time, the split frame 6 has already gathered leaving slight gaps between the respective split parts 10.

That is, the inner faces 10a of the splitted parts 10 are situated inside the cavity of the female mold 3.

② Next, after holding the upper layer member 13 between the upper layer member-fixing frame 4 and the split frame 6 by means of the expanding and contracting means 5 ( for the expanding and contracting means 5 in this case, it is possible to adopt an air pressure cylinder or an oil pressure cylinder), molten resin is supplied between the upper layer member 13 and the male mold 2 from outside the molding apparatus 1 .(See Fig. 12)

③ When the going up-and-down mechanism is put into action without delay, then the male mold 2 goes down as the expanding and contracting means 5 contracts, while the molten resin 15 streams to push up the upper layer member 13 to the side of the female mold 3, in concert with which the upper layer member 13 is squeezed while gliding and stretching between the upper layer member-fixing frame 4 and the split frame 6 into the concave part produced at the side of the female mold 3 .(See Fig. 13)

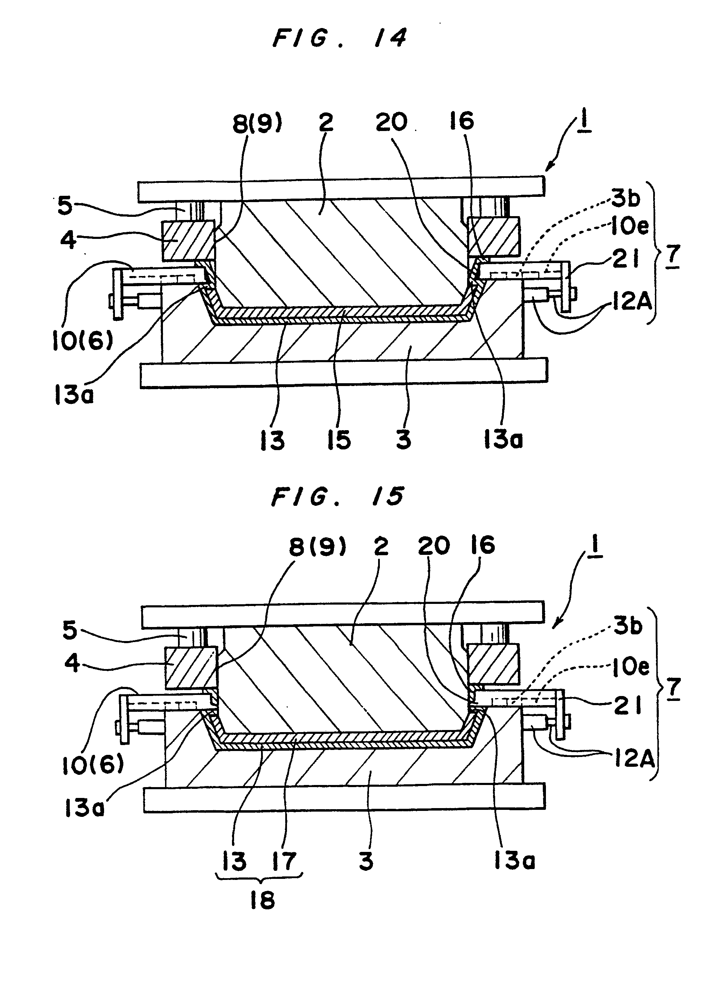

④ As the made mold 2 further goes down, the upper layer member 13 and the molten resin 15 unite in a body to be given form and graduate into the completion of the molding as in the exemplary embodiment. (See Fig. 14 )

⑤ After the synthetic resin 17 has hardend, the mold-tightening force is reduced a little, the split parts 10 are shifted and compressed further to the inside of the cavity of the female mold 3 by driving-expanding and contracting means 12A, when the split parts 10 gather completely and the cutting edges 20 cut off the upper layer member 13 .( See Fig. 15 )

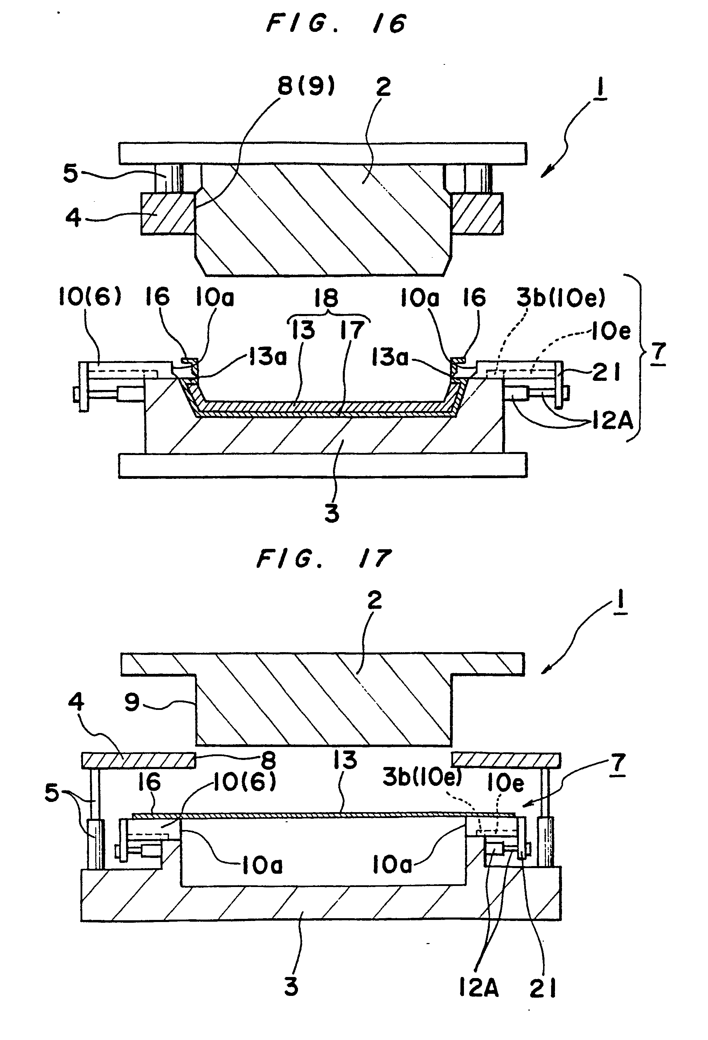

⑥ When the mold-tightenning force is removed to perfection, then the female mold 3 shifts upward, and next, when the driving-expanding and contracting means 12A extends, then the dovetail grooves 10e slide on the dovetails 3b and thereby the inner faces 10a of the split parts 10 shift to the outside of the cavity of the female mold 3 , when the laminated body 18 comes to be taken out. (See Fig. 16 )

In this modified embodiment 1, not springs but the driving-expanding and contracting means 12A is used for the shifting mechanism 7 , so that the molding apparatus 1 here does not require so much precise tolerance.

This shifting mechanism 7 is further furnished with the cutting edges, so that the cutting of the upper layer member can be conducted on one and the same apparatus.

[ Modified Embodiment 2 ]

Figs 17 to 19 are sectional views explaining the modified embodiment 2 relating to the method and apparatus according to the present invention.

Here the upper layer member-fixing frame 4 and the split frame 6 are shiftably attached to the side of the female mold 3 which is situated below, while the male mold 2 is situated above.

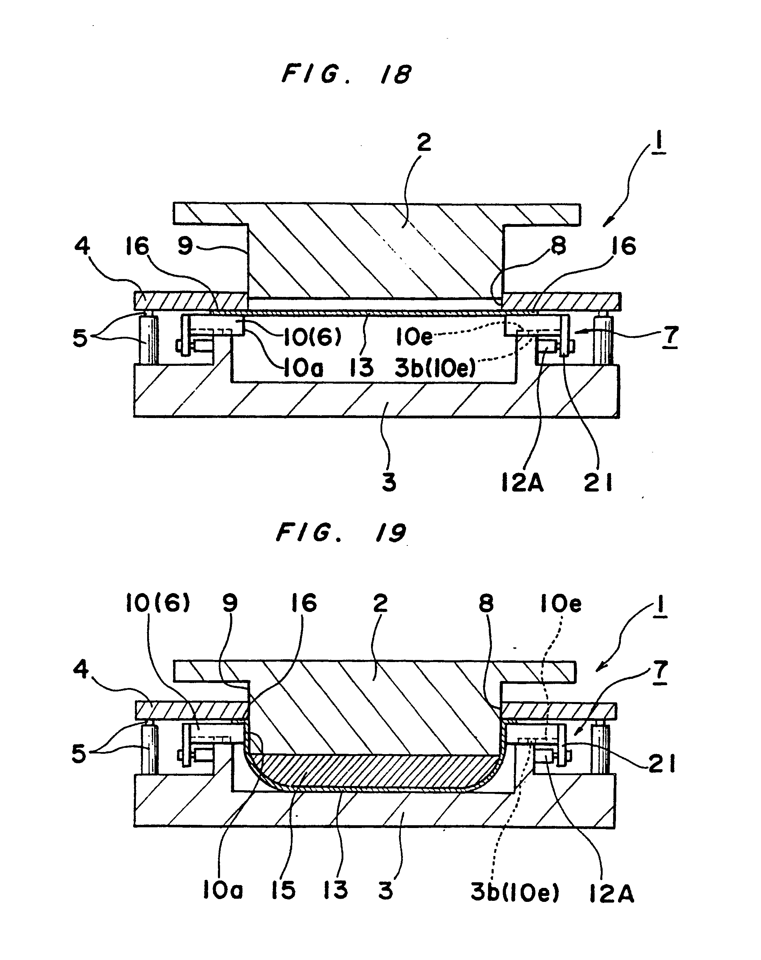

In the case of effectuating the method according to the invention on basis of the molding apparatus 1 ,the upper layer member 13 is placed on the split frame 6, as shown in Fig. 17, and the periphery 16 of the upper layer member 13 is held between the upper layer member-fixing frame 4 and the split frame 6, when the male mold 2 is made to go down, as shown Fig.18, and then the molten resin 11 is supplied to give form to the upper layer member 13 and to make the molding of the laminated body 18, as shown in Fig.19.

[ Modified Embodiment 3 ]

Fig. 20 is a sectional view explaining this modified embodiment 3 relating to the method and apparatus according to the invention, wherein the periphery 16 of the upper layer member 13 is held between the split frame 6 being attached to the female mold 3 which is situated above and the upper layer member-fixing frame 4 being shiftably attached to the side of the female mold 3.

By the way, the reference numeral 22 indicates an air pressure spring means.

In the case of effectuating the method according to the invention by the use of the molding apparatus 1 in this modified embodiment 3, the upper layer member 13 is placed on the upper layer member-fixing frame 4, as shown in Fig.20, the female mold 3 is made to go down to hold the upper layer member 13 between the split frame 6 and the upper layer resin 15 is supplied between the upper layer member-fixing frame 4 and the male mold 2 from the molten resin passage (not shown ) to give form to the upper layer member and to make the molding of the laminated body by mold-tightening.

In the method and apparatus described herein, the separating direction namely here means the mold-tightening direction is not always only the hereinbefore deseribed vertical direction, but it does not matter if it is the horizontal directions, for example.

In this latter case, last the molten resin 15 should flow out of the molding apparatus 1 , the supply of the molten resin 15 is peformed either after mold-tightening to some extent or before mold-tightening while making use of a receiver being built in advance within the apparatus.

As explained in detail in the above, the method described herein is designed in such a manner that the upper layer member is arranged between the upper layer member-fixing frame which is shiftably attached to the male mold side or the female mold side of the molding apparatus having the male mold and the female mold and which is provided with the sliding face where the outer side of the mail mold slides over the whole circumstance, and the split frame which is attached to the female mold side and slides on the face of the female mold being opposite to the upper layer member-fixing frame;

That after holding the periphery of the upper layer member between the upper layer member-fixing frame and the split frame, the female mold and the male mold are mold-tightened together within measure so as to give form to the upper layer member; and that after placing the upper layer member thus given form while leaving as it stand, the molten resin is supplied between the upper layer member and the male mold from the molten resins passage before the completion of the mold-tightening to make the molding of the molten resin.

With such a construction, the method has the effect that it not only requires no additives but also is adapted excellently to the mass production in simple working processes, and that it able to make the laminated body being in possession of a good appearance without wrinkles or tears on the upper layer member and being short of wrinkles on the bent parts of the upper layer member, as a result of which there can be obtained a laminated body with little residual stress owing to the orientation because of the molding of its synthetic resin here not being dependent on the injection molding method and further which has only a small deformation like distortion as well.

On the other hand, the molding apparatus is designed in such a manner that it comprises at least the male mold , the female mold, the upper layer member-fixing frame, the expanding and contracting means, the split frames, and the shifting mechanism, that the upper layer member-fixing frame is attached to the male mold or the female mold shiftably by means of the expanding and contracting means and is provided with the sliding face where the outer side of the male mold slides over the whole circumference, and that the split frame is attached to the female mold side and slides on the face of the female mold being opposite to the upper layer member-fixing frame gatherrably and dispersibly by means of the shifting mechanism, with the result that the inner face of the split frame are situated inside the cavity of the female mold at the gathering time and outside the cavity of the female mold at the dispering time, so that a bending machine for the upper layer mamber is not only required separeately but also the method according to the present invention having the above mentioned effects is able to be effectuated easily.

Further, the preferable feeling of the laminated body produced in accordance with the method of the invention can be kept long because of the effective pressure required for molding the synthetic resin being small, for example, now by being capable of preventing the foaming layer from crushing in case of using some foaming sheet for the upper layer member now by being capable of preventing the napped part from falling in case of using the cloth treated by nap-raising.

## Claims

1. A molding apparatus (1) comprising:
   a first mold (3) having a molding cavity;
   a second mold (2) adapted to mate with said molding cavity of said first mold (3); and
   an upper layer member-fixing frame (4) mounted around the side of said first mold (3) or said second mold (2), characterized by:
   an expanding and contracting means (5) for shifting said upper layer member-fixing frame (4) so that an outer side face (8) of said upper layer member-fixing frame (4) slides over the outside surface (9) of said second mold (2); and
   a split frame (6) attached around the edge of said first mold (3) through a shifting mechanism (7) to allow said split frame (6) to slide towards and away from said first mold molding cavity.

2. The apparatus as set forth in claim 1, wherein said upper layer member-fixing frame (4) has a tapered inner face (4a) and said split frame (6) has a tapered outer face (10b) for slidably engaging said tapered inner face (4a) of said upper layer member-fixing frame (4) as said first and second molds (3,2) are urged towards each other.

3. The apparatus of claim 1 or 2, wherein said upper layer member-fixing frame (4) is shiftably attached to the outside of said first mold (3) which is situated below and said split frame (6) is attached to said second mold (2) which is situated above.

4. The apparatus of claim 1 or 2, wherein said upper layer member-fixing frame (4) is attached to the outside of said first mold (3) which is situated above and said second mold (2) is attached to said split frame (6) which is situated below.

5. The apparatus of claim 1 or 2, wherein split frame (6) is attached to said second mold (2) which is situated below and said upper layer member-fixing frame (4) is shiftably attached to the outside of said second mold (2).

6. The apparatus of claim 1 or 2, wherein said split frame (6) is attached to said second mold (2) which is situated above and said upper layer member-fixing frame (4) is shiftably attached to the outside of said second mold (2).

7. A method of making a laminated body (32) having a synthetic resin (30) provided with an upper layer member (31) thereon comprising the steps of;
arranging said upper layer member (13) between an upper layer member-fixing frame (4) attached to the side of a second mold (2) and a split frame (6) attached to a first mold (3);
supplying molten resin (15) between said first and second molds (3,2) at any time from said arranging and prior to completion of pressing;
closing said split frame (6) and said upper layer member fixing-frame (4) so that a periphery of said upper layer member is held by said split frame (6) and said upper layer member-fixing frame (4);
closing said first and second molds (3,2) so as to give form to said upper layer member (13);
pressing said two molds (2,3) together so as to cause said upper layer member (13) and said molten resin (15) to move with compression to conform to the shape of said two molds (2,3) and cover the surface of said resin body (15) with said layer member (13); characterized by:
shifting said split frame (6) to an inside cavity of said first mold (3) simultaneously or prior to closing said split frame (6) and said upper layer member-fixing frame (4); and
after pressing, further pressing said first and second molds (3,2) together to bend said layer member (13) for lapping an end portion of said laminated body (32).

8. The method as set forth in claim 7 further characterized by supplying said molten resin (15) through a molten resin passage in the interior of said second mold (2).

9. The method as set forth in claim 7 further characterized by supplying said molten resin (15) through a molten resin passage outside said molding apparatus.

10. The method as set forth in claim 7, 8 or 9 further characterized by holding the periphery of said upper layer member (13) between said upper layer member-fixing frame (4) which is shiftably attached to the side of said second mold (2) and situated below and said split frame (6) which is attached to said first mold (3) and situated above.

11. The method as set forth in claim 7, 8 or 9 further characterized by holding the periphery of said upper layer member (13) between said upper layer member-fixing frame (4) which is attached to the outside of said first mold (3) situated above and said split frame (6) which is attached to second mold (3) situated below.

12. The method as set forth in claim 7, 8 or 9 further characterized by holding the periphery of said upper layer member (13) between said split frame (6) which is attached to said second mold (3) situated below, and said upper layer member-fixing frame (4) which is attached to the outside of said second mold (2).

13. The method as set forth in claim 7, 8 or 9 further characterized by holding the periphery of said upper layer member (13) between said split frame (6) which is attached to said second mold (2) situated above and said upper layer member-fixing frame (4) which is attached to the outside of said second mold (2).

## Revendications

1. Appareil de moulage (1) comprenant :
un premier moule (3) ayant une cavité de moulage, un second moule (2) destiné à coopérer avec la cavité de moulage du premier moule (3), et
un cadre (4) de fixation d'un organe constituant une couche supérieure, monté autour du côté du premier moule (3) ou du second moule (2), caractérisé par :
un dispositif (5) de dilatation et de contraction destiné à déplacer le cadre (4) de fixation d'organe constituant une couche supérieure de manière qu'une face latérale externe (8) du cadre (4) de fixation glisse sur la surface externe (9) du second moule (2), et
un cadre divisé (6) fixé autour du bord du premier moule (3) par l'intermédiaire d'un mécanisme de déplacement (7) de manière que le cadre divisé (6) puisse glisser en translation par rapport à la cavité de moulage du premier moule.

2. Appareil selon ·la revendication 1, dans lequel le cadre (4) de fixation d'organe constituant une couche supérieure a une face interne inclinée (4a) et le cadre divisé (6) a une face externe inclinée (10b) destinée à assurer la coopération par glissement de la face interne inclinée (4a) du cadre de fixation (4) lorsque le premier et le second moule (3, 2) sont repoussés l'un vers l'autre.

3. Appareil selon la revendication 1 ou 2, dans lequel le cadre (4) de fixation de l'organe constituant une couche supérieure est fixé à l'extérieur du premier moule (3) afin qu'il puisse coulisser, le premier moule étant placé au-dessous, et le cadre divisé (6) est fixé au second moule (2) qui est placé au-dessus.

4. Appareil selon la revendication 1 ou 2, dans lequel le cadre (4) de fixation de l'organe constituant une couche supérieure est fixé à l'extérieur du premier moule (3) qui est placé au-dessus et le second moule (2) est fixé au cadre divisé (6) qui est placé au-dessous.

5. Appareil selon la revendication 1 ou 2, dans lequel le cadre divisé (6) est fixé au second moule (2) qui est fixé au-dessous et le cadre (4) de fixation de l'organe constituant une couche supérieure est fixé à l'extérieur du second moule (2) afin qu'il puisse coulisser.

6. Appareil selon la revendication 1 ou 2, dans lequel le cadre divisé (6) est fixé au second moule (2) qui est placé au-dessus et le cadre (4) de fixation de l'organe constituant une couche supérieure est fixé à l'extérieur du second moule (2) afin qu'il puisse coulisser.

7. Procédé de fabrication d'un corps stratifié (32) ayant une résine synthétique (30) munie d'un organe constituant une couche supérieure (31), le procédé comprenant les étapes suivantes :
la disposition de l'organe constituant une couche supérieure (13) entre le châssis (4) de fixation d'organe constituant une couche supérieure fixé du côté d'un second moule (2) et un cadre divisé (6) fixé à un premier moule (3),
la transmission de résine fondue (15) entre le premier et le second moule (3, 2) à un moment quelconque compris entre ladite disposition et avant la fin de la compression,
la fermeture du cadre divisé (6) et du cadre (4) de fixation de l'organe constituant une couche supérieure de manière que la périphérie de l'organe constituant une couche supérieure soit maintenue par le cadre divisé (6) et le cadre (4) de fixation d'organe constituant une couche supérieure,

la fermeture du premier et du second moule (3, 2) de manière qu'ils mettent en forme ledit organe constituant une couche supérieure (13), et
la compression des deux moules (2, 3) l'un vers l'autre de manière que ledit organe constituant une couche supérieure (13) et la résine fondue (15) se déplacent en compression et prennent la configuration des deux moules (2, 3) et recouvrent la surface du corps (15) de résine dudit organe constituant une couche supérieure (13),
caractérisé par :
le déplacement du cadre divisé (6) vers une cavité interne du premier moule (3) lors de la fermeture du cadre divisé (6) et du cadre (4) de fixation de l'organe constituant une couche supérieure ou avant cette fermeture, et
après la compression, une compression supplémentaire du premier et du second moule (3, 2) l'un contre l'autre afin que ledit organe constituant une couche supérieure (13) soit courbé et recouvre une partie d'extrémité du corps stratifié (32).

8. Procédé selon la revendication 7, caractérisé en outre par la transmission de la résine fondue (15) par un passage de résine fondue formé à l'intérieur du second moule (2).

9. Procédé selon la revendication 7, caractérisé en outre par la transmission de la résine fondue (15) par un passage de circulation de résine fondue placé à l'extérieur de l'appareil de moulage.

10. Procédé selon la revendication 7, 8 ou 9, caractérisé en outre par le maintien de la périphérie dudit organe constituant une couche supérieure (13) entre le cadre (4) de fixation dudit organe constituant une couche supérieure qui est fixé du côté du second moule (2) afin qu'il puisse coulisser et qui est placé au-dessous et le cadre divisé (6) qui est fixé au premier moule (3) et qui est placé au-dessus.

11. Procédé selon la revendication 7, 8 ou 9, caractérisé en outre par le maintien de la périphérie de l'organe constituant une couche supérieure (13) entre le cadre (4) de fixation de l'organe constituant une couche supérieure qui est fixé à l'extérieur du premier moule (3) placé au-dessus et le cadre divisé (6) qui est fixé au second moule (3) placé au-dessous.

12. Procédé selon la revendication 7, 8 ou 9, caractérisé en outre par le maintien de la périphérie dudit organe constituant une couche supérieure (13) entre le cadre divisé (6) qui est fixé au second moule (3) placé au-dessous,et le cadre (4) de fixation dudit organe constituant une couche supérieure qui est fixé à l'extérieur du second moule (2).

13. Procédé selon la revendication 7, 8 ou 9, caractérisé en outre par le maintien de la périphérie de l'organe constituant une couche supérieure (13) entre le cadre divisé (6) qui est fixé au second moule (2) placé au-dessus et le cadre (4) de fixation de l'organe constituant une couche supérieure qui est fixé à l'extérieur du second moule (2).

**Ansprüche**

1. Vorrichtung (1) zum Herstellen eines Schichtkörpers, welche umfaßt:
ein erstes Formteil (3) mit einer Formgebungs-Ausnehmung;
ein zweites Formteil (2), welches angepaßt ist, in die Formgebungs-Ausnehmung des ersten Formteiles (3) eingeführt zu werden; und
einen Oberschichtteil-Fixierrahmen (4), welcher um die Seite des ersten Formteiles (3) oder des zweiten Formteiles (2) herum angebracht ist,
**gekennzeichnet durch**
eine sich ausdehende und zusammenziehende Einrichtung (5) zum Verschieben des Oberschichtteil-Fixierrahmens (4), so daß eine außenseitige Oberfläche (8) des Oberschichtteil-Fixierrahmens (4) über die Außenoberfläche (9) des zweiten Formteiles (2) gleitet; und
einen mehrteiligen Rahmen (6), welcher entlang der Kante des ersten Formteiles (3) durch einen Schiebemechanismus (7) angefügt ist, um dem mehrteiligen Rahmen (6) zu erlauben, zu der Formgebungs-Ausnehmung des ersten Formteiles hin und von dieser weg zu gleiten.

2. Vorrichtung nach Anspruch 1, **dadurch gekennzeichnet**, daß der Oberschichtteil-Fixierrahmen (4) eine konisch zulaufende innere Oberfläche (4a) aufweist, und der mehrteilige Rahmen (6) eine konisch zulaufende äußere Oberfläche (10b) aufweist, um gleitend in die konisch zulaufende innere Oberfläche (4a) des Oberschichtteil-Fixierrahmens (4) einzugreifen, wenn die ersten und zweiten Formteile (3, 2) zusammengepreßt werden.

3. Vorrichtung nach Anspruch 1 oder 2, **dadurch gekennzeichnet**, daß der Oberschichtteil-Fixierrahmen (4) gleitend an dem Äußeren des ersten Formteiles (3) angebracht ist, welches unterhalb liegt, und der mehrteilige Rahmen (6) an dem zweiten Formteil (2) angebracht ist, welches oberhalb liegt.

4. Vorrichtung nach Anspruch 1 oder 2, **dadurch gekennzeichnet**, daß der Oberschichtteil-Fixierrahmen (4) an der Außenseite des ersten Formteiles (3) angebracht ist, welches oberhalb liegt, und das zweite Formteil (2) an dem mehrteiligen Rahmen (6) angebracht ist, welcher unterhalb liegt.

5. Vorrichtung nach Anspruch 1 oder 2, **dadurch gekennzeichnet**, daß der mehrteilige Rahmen (6) an dem zweiten Formteil (2) anliegt, welches unterhalb liegt, und der Oberschichtteil-Fixierrahmen (4) verschiebbar an der Außenseite des zweiten Formteiles (2) anliegt.

6. Vorrichtung nach Anspruch 1 oder 2, **dadurch gekennzeichnet**, daß der mehrteilige Rahmen (6) an dem zweiten Formteil (2) anliegt, welches oberhalb liegt, und der Oberschichtteil-Fixierrahmen (4) verschiebbar an der Außenseite des zweiten Formteiles (2) anliegt.

7. Verfahren zur Herstellung eines Schichtkörpers (32) aus Kunstharz (30) mit einem Oberschichtteil (31) darauf, welches die Schritte umfaßt:
Anordnen des Oberschichtteiles (13) zwischen einem Oberschichtteil-Fixierrahmen (4), welcher an der Seite eines zweiten Formteiles (2) anliegt, und einem mehrteiligen Rahmen (6), welcher an einem ersten Formteil (3) anliegt;
Einfüllen von flüssigem Kunstharz (15) zwischen die ersten und zweiten Formteile (3, 2) zu irgendeinem Zeitpunkt nach dem Anordnen und bevor ein Preßvorgang abgeschlossen ist;
Schließen des mehrteiligen Rahmens (6) und des Oberschichtteil-Fixierrahmens (4), so daß ein Rand des Oberschichtteiles von dem mehrteiligen Rahmen (6) und dem Oberschichtteil-Fixierrahmen (4) gehalten wird; Schließen der ersten und zweiten Formteile (3, 2), um das Oberschichtteil (13) zu formen;
Zusammenpressen der zwei Formteile (2, 3), um das Oberschichtteil (13) und das flüssige Harz (15) zu veranlassen, sich unter Druck der Gestalt der beiden Formteile (2, 3) anzupassen, und die Oberfläche des Harzkörpers (15) mit dem Schichtteil (13) abzudecken; **gekennzeichnet durch**:
Schieben des mehrteiligen Rahmens (6) zu einer inneren Ausnehmen des ersten Formteiles (3) gleichzeitig mit dem Schließen des mehrteiligen Rahmens (6) und des Oberschichtteil-Fixierrahmens (4) oder zuvor; und nach dem Pressen, weiteres Zusammenpressen der ersten und zweiten Formteile (3, 2), um das Schichtteil (13) zu biegen, um einen Endabschnitt des Schichtkörpers (32) zu falten.

8. Verfahren nach Anspruch 7, dadurch gekennzeichnet, daß das flüssige Harz (15) durch eine Flüssigharzpassage im Inneren des zweiten Formteiles (2) eingefüllt wird.

9. Verfahren nach Anspruch 7, **dadurch gekennzeichnet**, daß das Flüssigharz (15) durch eine Flüssigharzpassage außerhalb der Schichtformvorrichtung eingefüllt wird.

10. Verfahren nach Anspruch 7, 8 oder 9, **dadurch gekennzeichnet**, daß der Rand des Oberschichtteiles (13) zwischen dem Oberschichtteil-Fixierrahmen (4), welcher verschiebbar an der Seite des zweiten Formteiles (2) anliegt, und sich unten befindet, und am mehrteiligen Rahmen (6) gehalten wird, welcher an dem ersten Formteil (3) anliegt und sich oben befindet.

11. Verfahren nach Anspruch 7, 8 oder 9, **dadurch gekennzeichnet**, daß der Rand des Oberschichtteiles (13) zwischen dem Oberschichtteil-Fixierrahmen (4), welcher an dem Äußeren des ersten Gußteiles (3), welches sich oben befindet, anliegt, und dem mehrteiligen Rahmen (6), welcher an dem zweiten Formteil (3) anliegt, welches sich unten befindet, gehalten wird.

12. Verfahren nach Anspruch 7, 8 oder 9, **dadurch gekennzeichnet**, daß der Rand des Oberschichtteiles (13) zwischen dem mehrteiligen Rahmen (6), welcher an dem zweiten Formteil (3) anliegt, welches sich unten befindet, und dem Oberschichtteil-Fixierrahmen (4) gehalten wird, welcher an dem Äußeren des zweiten Formteiles (2) anliegt.

13. Verfahren nach Anspruch 7, 8 oder 9, **dadurch gekennzeichnet**, daß der Rand des Oberschichtteiles (13) zwischen dem mehrteiligen Rahmen (6), welcher an dem zweiten Formteil (2) anliegt, welches sich oben befindet, und dem Oberschichtteil-Fixierrahmen (4) gehalten wird, welcher an dem Äußeren des zweiten Formteiles (2) anliegt.

# FIG. 1

FIG. 2

FIG. 3

# FIG. 4

FIG. 5

FIG. 6

FIG. 7

FIG. 8

## FIG. 9

# FIG. 10

# FIG. 11

# FIG. 12

# FIG. 13

## FIG. 14

## FIG. 15

FIG. 16

FIG. 17

FIG. 18

FIG. 19

FIG. 20

FIG. 21

FIG. 22